(19)

**Europäisches Patentamt**
**European Patent Office**
**Office européen des brevets**

(11) **EP 2 336 977 A1**

(12) **EUROPEAN PATENT APPLICATION**

(43) Date of publication:
**22.06.2011 Bulletin 2011/25**

(51) Int Cl.:
***G06T 15/00*** *(2011.01)*

(21) Application number: **09179394.3**

(22) Date of filing: **16.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **The Provost, Fellows and Scholars of the College**
**of the Holy and Undivided Trinity of Queen Elizabeth near Dublin**
**Dublin 2 (IE)**

(72) Inventors:
  • **MANZKE, Michael**
    **Dublin 7 (IE)**

  • **DOYLE, Michael**
    **Dublin 24 (IE)**
  • **BRENNAN, Ross**
    **Dublin 18 (IE)**

(74) Representative: **Lucey, Michael**
    **PURDYLUCEY**
    **Intellectual Property**
    **Suite 138-139**
    **The Chapel Building**
    **Mary's Abbey**
    **Dublin 7 (IE)**

(54) **A Micro-architecture System and Method for ray tracing and collision detection**

(57)      The invention hardware system for performing a plurality of calculations on at least one object in an area, said system comprising means for performing ray tracing to determine rays of light that intersect with at least one object to calculate one or more intersections; and means for performing collision detection comprising a collision detection unit adapted to receive inputs from the at least two intersections and the ray used to intersect to check for potential collisions between the objects. The invention allows for full ray tracing, including shading, and collision detection for triangle meshes, both rigid and deformable, to be performed using the same hardware device. The invention provides a single hardware architecture that is suitable for performing both operations, that allows hardware acceleration for both algorithms, while preserving resources by sharing the same logic between both algorithms.

Figure 2

**Description**

**Field of the Invention**

The invention relates to ray tracing. In particular the invention relates to ray tracing and collision detection for use in the generation of computer graphics.

**Background to the Invention**

Ray tracing is a highly realistic method of generating computer graphics. It involves the direct simulation of light in order to generate images of an environment. However, due to its simulation approach, it is computationally expensive, and can be quite sluggish if implemented inefficiently, even on today's commodity hardware.

Ray tracing has been employed in dynamic environments, such as rigid body simulations. The realistic results afforded by ray tracing often make it the rendering algorithm of choice in such systems. Physical simulations attempt to model the physical behaviour of objects as they interact and collide with each other in a scene. These techniques are of paramount importance in many engineering simulations, virtual reality systems, robotics simulations, video games and computer aided design and manufacturing. As with ray tracing, the physical simulation problem often has high computational demands. Dedicated hardware has been used to accelerate each of these algorithms with great success. Furthermore, it has recently been shown that the rigid body and deformable physics simulation problem can be reformulated as a ray tracing problem, and therefore can be solved by very similar means. However a further problem with this approach is that it is computationally difficult to implement effectively.

Recursive ray tracing, which is the form most commonly used today for rendering purposes, was first disclosed by Turner Whitted, 'An improved illumination model for shaded display, Communications of the ACM, v.23 n.6, p.343-349, June 1980'. In principle, the recursive ray tracing algorithm is very simple, yet can produce astonishingly realistic results. This is due to the physically correct simulation of light as it travels through a scene.

The algorithm begins by tracing a ray of light through each pixel in the image plane, and finding the closest intersection along that ray with an object. Rays originating from the image plane are termed primary rays. When the closest intersection has been found, the colour at that point in space is determined. This is accomplished by casting further rays towards each of the light sources to determine if these are visible from this point. These rays are termed shadow rays. If a shadow ray does not find an intersection closer than its corresponding light source, it is determined that the light source is visible from this point and its contribution to the intensity at that point is taken into account.

Ray traced images are perhaps best known for their realistic reproduction of secondary effects such as reflection and refraction. To this end, when an intersection is found it is possible to cast further rays to determine if any reflection or refraction effects are occurring at this point. These rays are termed secondary rays, to distinguish them from primary rays. These rays are cast in the direction that light would be reflecting or refracting from this point. These rays are then traced through the scene, and the first object intersected by them represents the object that is reflected or refracted by the original surface. The shading at these points then contributes to the overall colour of the pixel. Upon intersection of a secondary ray, further secondary rays may be cast recursively through the scene, all contributing to the final pixel colour, hence the term 'recursive ray tracing'. Of course, this bouncing of light can continue for many more bounces, with each bounce contributing to the pixel colour.

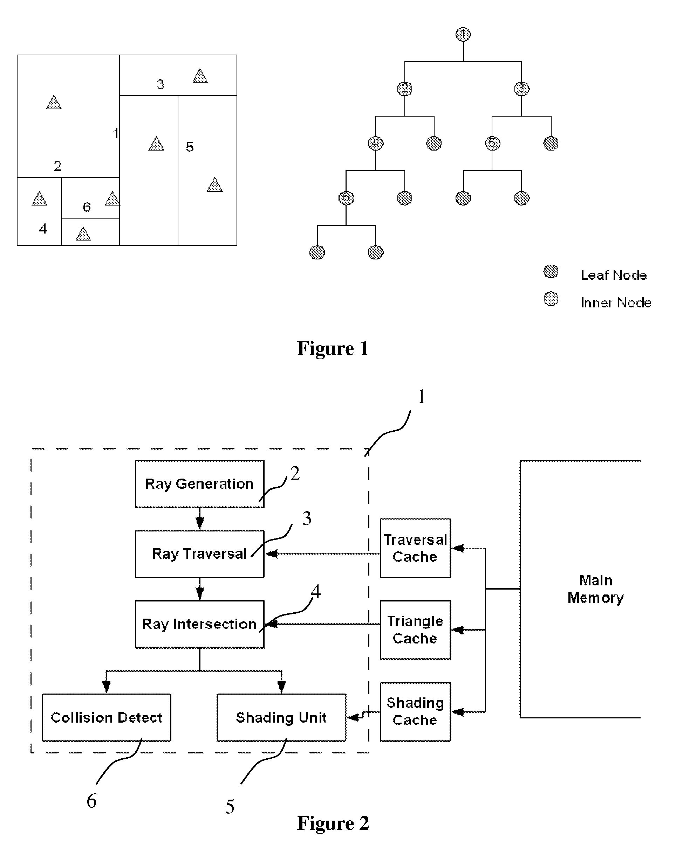

The principal task in any ray tracer is to determine which rays of light intersect with which objects, and which objects those rays of light strike first. A naive approach to this problem sees every ray of light being tested against every single object in a scene (or more accurately, each polygon of each object), even if a ray path comes nowhere close to some objects. This can obviously lead to very poor performance, as typically one is dealing with several million rays of light and several million polygons. To convey some sense of spatial locality of a scene, such that rays need only check objects which are close enough to it to be likely intersection candidates, acceleration data structures are usually built. To explain the concept of these more clearly, take a popular example of such a structure, a kd-tree. A kd-tree is a structure that recursively subdivides space by means of axis aligned planes. When a region is subdivided, the sub-regions of space are further subdivided recursively until some kind of termination criterion is met; for example, until only one polygon remains in each sub-space. As each sub-space is subdivided further, the axis aligned plane by which it is subdivided is alternated. That is, the region is first subdivided along the x-axis, then the y-axis, then the z-axis and cycle begins anew starting back with the x axis. Figure 1 shows an example of this. The original region is represented by the square box. The region is first subdivided by the plane marked '1'. The sub-regions created by this split are then further subdivided by planes 2 and 3. Again, these regions are further sub-divided until only one polygon remains in each sub-region. Building this structure results in the tree shown on the right. The numbers inside the circles directly correspond to each splitting plane, while the green circles identify the leaf nodes (final sub-regions of the tree after splitting has terminated). These leaf nodes store a pointer to the polygons in that region.

Once the structure is built it can be searched for candidate polygons, without the need to check every single polygon in the scene. This reduces the search from a linear to a logarithmic complexity in the number of triangles.

The procedure of searching the tree is known as traversal. The search is started at the root node of the tree and determines which nodes to visit next based on the direction of the ray and the location of the sub-trees. As it is a binary split at each stage, there are three possibilities: the ray can go into the left sub-tree, the right sub-tree, or both. In the case of both, the sub-region is placed farthest away from the ray on a ray stack, where it can be stored for later investigation if the nearest sub-tree does not yield an intersection. Note that the nearest can be the left or right sub-trees, depending on the direction and origin of the ray.

Ray Tracing is primarily associated with rendering. However, the casting of rays through a 3D world is also useful to other algorithms. In a published paper by 'Everton Hermann, François Faure, Bruno Raffin, Ray-Traced Collision Detection for Deformable Bodies, In 3rd International Conference on Computer Graphics Theory and Applications, GRAPP 2008. Funchal, Madeira, Portugal, January 2008', a technique is described for deformable and rigid body collision detection using ray casting. Rigid bodies refer to those objects whose shape does not change, whereas deformable bodies may undergo alterations in their dimensions (e.g. cloth). The rigid body and deformable collision problem essentially involves detecting when two objects come into contact with each other. The resolution of this problem is of great use in many applications such as computer aided design and robotic simulations. If collisions were not accounted for, objects would unrealistically pass through each other rather than colliding and interacting. The technique begins with two potentially colliding bodies. Typically, a broad phase algorithm is used to determine pairs of objects which have a significant probability of intersection. The remaining phase, the narrow phase, determines exact collision points.

Proposed hardware solutions have attempted to overcome these problems. With the respect to ray tracing, a number of hardware implementations are known. A known architecture presents collision detection hardware that allows a variety of primitive intersections to be calculated is disclosed in Hardware-Accelerated Ray-Triangle Intersection Testing for High-Performance Collision Detection, Sung-Soo Kim, Seung-Woo Nam, Do-Hyung Kim and In-Ho Lee. The 15th International Conference in Central Europe on Computer Graphics, Visualization and Computer Vision' 2007. Among these, the paper focuses on ray/triangle intersections and gives ray tracing as an example. However, it does not perform a full ray trace as it cannot render images, and merely performs ray/triangle intersections. Furthermore, it does not perform full rigid body or deformable collision detection. US Patent Publication number US2008/0129734 A1 details a similar system for ray/triangle intersections. Again, it does not represent a full ray tracer.

Many applications require the combination of rendering and physical simulation. An obvious example is video games; but any application requiring visualization of a physical simulation is applicable. Both problems are essentially the same: the need to trace rays through space and determine intersections with any objects.

There is therefore a need in the industry to provide a system, method and architecture to overcome the above mentioned problems.

### Summary of the Invention

According to the invention there is provided, as set out in the appended claims, a hardware system for performing a plurality of calculations on at least one object in an area, said system comprising:

> means for performing ray tracing to determine rays of light that intersect with at least one object to calculate one or more intersections; and
> means for performing collision detection comprising a collision detection unit adapted to receive inputs from the at least two intersections and the ray used to intersect to check for potential collisions between the objects.

The invention allows for fully ray tracing, including shading, and collision detection for triangle meshes, both rigid and deformable, to be performed using the same hardware device. It is intended to provide a full image rendering capability. One of the advantages of the present invention is that it saves a large amount of resources on chip, which may be used for other functions or to accelerate performance further. The invention provides a single hardware architecture that is suitable for performing both operations, that allows hardware acceleration for both algorithms, while preserving resources by sharing the same logic between both algorithms.

In one embodiment inputs to the collision detection unit comprises two intersections, one intersection for each object, such that the angle between the normal vectors and distance along the ray of each intersection is calculated and a decision is made to determine whether a collision has occurred.

In one embodiment there is provided two intersection units wherein the two units perform both intersection calculations in parallel, and inputs the intersections to the single collision detection unit.

In one embodiment there is provided a traversal unit coupled with a cache memory, said cache memory allows frequently visited nodes to be stored locally to provide faster memory access times.

In one embodiment the intersection unit comprises means for determining any intersections between a tree leaf node's triangles and a particular ray.

In one embodiment a weight ω is associated with each ray, said weights are propagated down the tree by successive multiplications such that each ray is added successively to a pixel accumulator until all rays have been processed.

In one embodiment there is provided a rendering means, for example a shading unit.

In one embodiment there is provided means to keep track of a plurality of rays at each intersection by generating a ray stack.

In one embodiment there is provided means for generating secondary and shadow rays and storing in said ray stack. In one embodiment said means comprises detecting a ray at a shading stage, such that further rays are placed onto the stack, until no more rays are present on the stack, so that the final pixel colour can be determined.

In a further embodiment there is provided a method for performing a plurality of calculations on at least one object in an area in a system, said method comprising the steps of:

performing ray tracing to determine rays of light that intersect with at least one object to calculate one or more intersections; and

performing collision detection comprising a collision detection unit adapted to receive inputs from at least two intersections and the determined rays used to intersect to check for potential collisions between different objects.

In one embodiment the inputs to the collision detection unit comprises two intersections, one intersection for each object, such that the angle between the normal vectors and distance along the ray of each intersection is calculated and a decision is made to determine whether a collision has occurred.

In one embodiment the method comprises using two intersection units to carry out the steps of performing both intersection calculations in parallel, and inputting the intersections to the single collision detection unit.

In one embodiment there is provided the step of coupling a traversal unit with a cache memory, said cache memory allows frequently visited nodes to be stored locally to provide faster memory access times.

There is also provided a computer program comprising program instructions for causing a computer program to carry out the above method which may be embodied on a record medium, carrier signal or read-only memory.

## Brief Description of the Drawings

The invention will be more clearly understood from the following description of an embodiment thereof, given by way of example only, with reference to the accompanying drawings, in which:-

Figure 1 is a prior art kd-tree that recursively subdivides space by means of axis aligned planes;

Figure 2 illustrates a top level system architecture according to the invention;

Figure 3 illustrates a register transfer level diagram of the ray generation hardware shown in Figure 2;

Figure 4 illustrates a detailed diagram of the traversal decision logic of the ray traversal hardware shown in Figure 2;

Figure 5 illustrates the ray intersection hardware shown in Figure 2;

Figure 6 shows an example stack entry for a reflection ray;

Figure 7 illustrates a detailed diagram of the shading unit shown in Figure 2; and

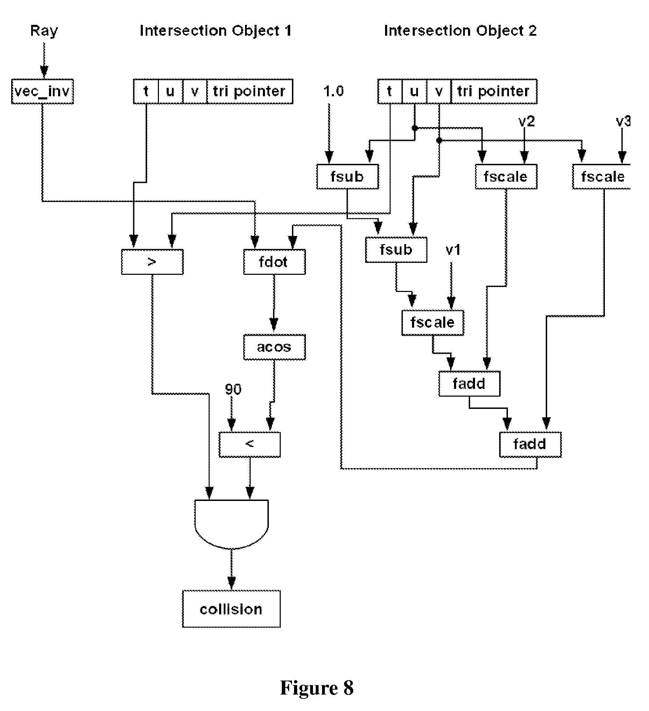

Figure 8 illustrates a detailed diagram architecture of the collision hardware shown in Figure 2.

## Detailed Description of the Drawings

Figure 2 illustrates a top level block diagram architecture according to the invention, indicated generally by the reference numeral 1.The system architecture consists of a number of distinct units. A ray generation unit 2 produces a ray, which is then fed into a traversal unit 3. The ray is traversed with the acceleration data structure until a leaf node is found. The tree itself is stored in main memory. Once a candidate leaf node is found, the ray and the leaf index is transferred to an intersection unit 4, which fetches the relevant triangles from memory. If no intersection is found, control is passed back to the traversal unit which searches the tree further for more candidate leaf nodes.

If an intersection is determined, the intersection information is sent to a shading unit 5 which shades the pixel, possibly casting more rays into the scene. In the case of a physics calculation, the process is similar, except instead the intersection information is sent to a collision detection unit 6. Furthermore, for collision operations, two intersections are required, requiring two cycles of the pipeline. Alternatively, two units can perform both intersections in parallel, sharing a single collision unit.

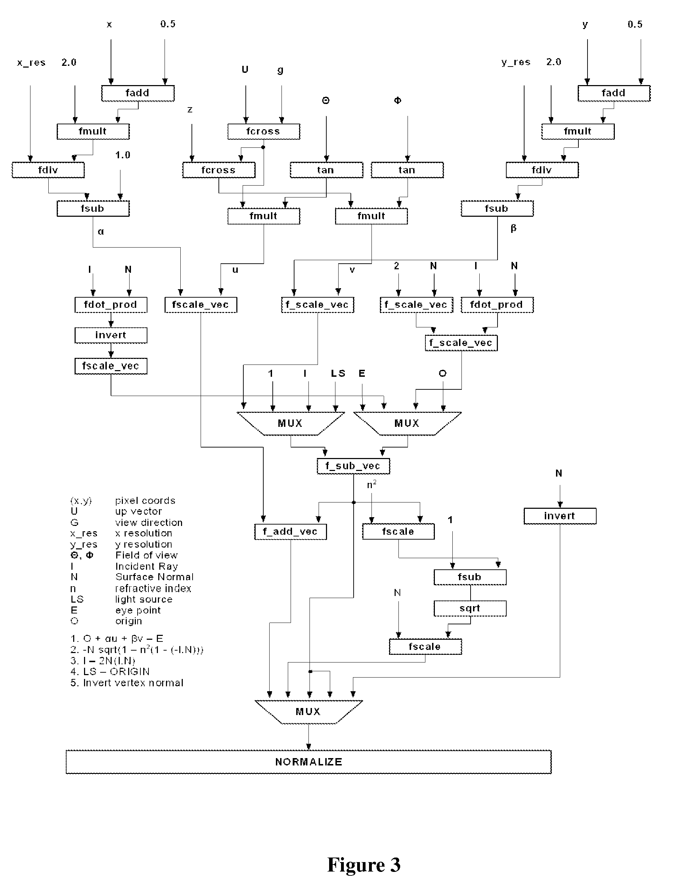

The ray generation unit 4 is responsible for determining the origin and direction of each of the rays in the system. For the purposes of rendering, the system can support primary, secondary and shadow rays. For the purposes of physics calculations, the unit can generate collision detection rays. Each of these rays requires different logic to produce, and their formulae are given. A detailed register transfer level diagram is shown in Figure 3. The unit outputs a normalized ray, which is then passed onto the traversal unit. For the purposes of shading (which will become clear in the shading unit 5), the information required for the generation of each ray is taken from a ray stack. For different kinds of ray, the appropriate information appears on the stack for evaluating the various formulae given below.

The traversal unit 3 is responsible for searching within the acceleration data structure of a specified object to determine candidate leaf nodes for intersection (region of space where possible ray/triangle intersections occur). In one embodiment of the system, kd-trees could be used, although in principle any acceleration data structure would be suitable. Each node of the system would store pointers to its children, its dimensions, its splitting axis and a flag indicating if it is a leaf node or not. Leaf nodes would instead store a list of triangles.

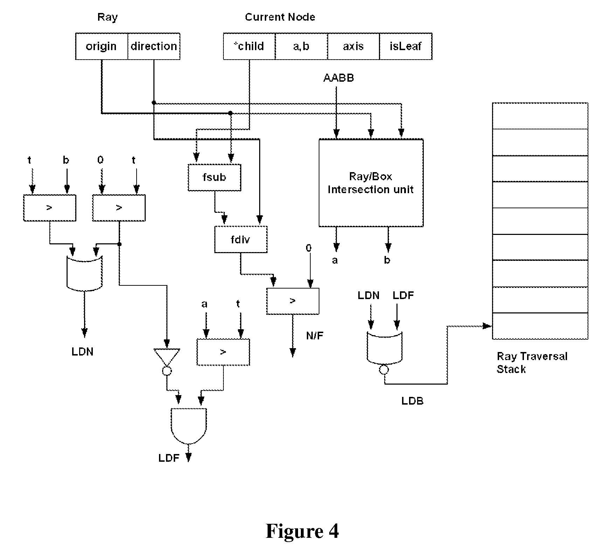

The kd-tree traversal described here is performed by keeping track of three values: $\alpha$, the distance along the ray at which it enters the subregion; b, the distance along the ray of the exit point, and $t$ the distance along the ray to this region's splitting plane. Depending on the relation between these three values it can be determined which nodes must be traversed. An initial ray/box intersection must occur to obtain initial values for $\alpha$ and $b$. Thereafter, they can be quickly derived from their parent node's values. The decision logic determines whether the system should load the near sub-tree (LDN), load the far sub-tree (LDF) or load both, placing the far sub-tree on the ray traversal stack. This stack should not be confused with the ray generation stack. The traversal stack stores sub-trees which possibly require further investigation. A detailed diagram of the traversal decision logic is shown in Figure 4.

The traversal unit 3 is coupled with a cache, which allows frequently visited nodes to be stored locally. Coherent rays (rays which shared a similar origin and direction) will visit largely similar nodes of the tree and thus a cache can provide faster memory access times.

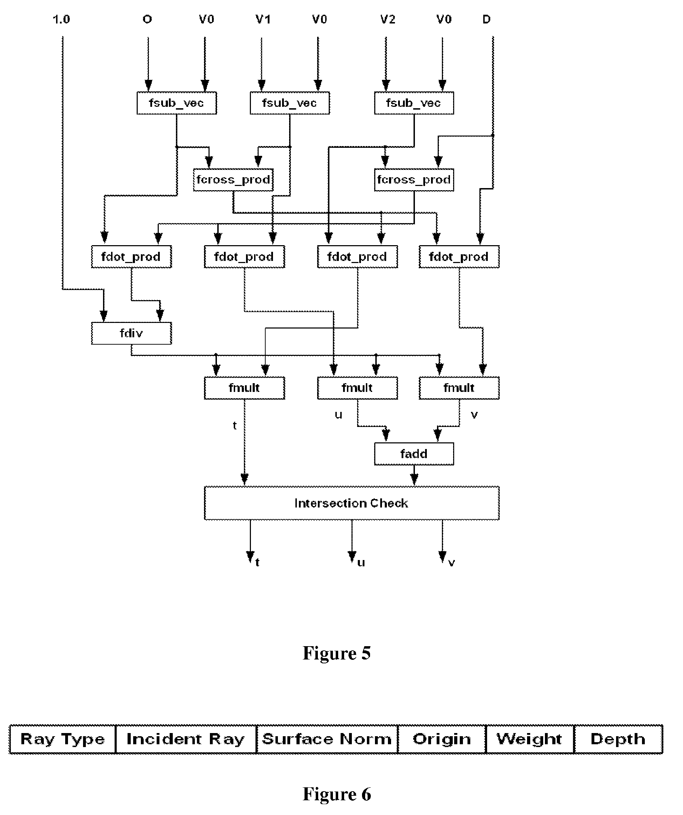

The intersection unit 4 is responsible for determining any intersections between a leaf node's triangles and a particular ray. The unit employs the efficient triangle intersection algorithm to accomplish this, for example a Moller-Trumbore algorithm. A detailed diagram of the intersection unit is given below. The input to the unit is a triangle (v0, v1, v2) and a ray origin (O) and direction (D). The output of the intersection unit is a triangle pointer and a set of three values; $t, u$ and $v$. The values (u,v) correspond to the barycentric coordinates of the triangle that is intersected, while the $t$ value represents the distance along the ray of the intersection. Once the closest intersection is found, this information is sent to a shading unit. Figure 5 shows a detailed architecture of the intersection unit 4.

The shading unit 5 is active only when the pipeline is used in rendering mode, and implements a simple Phong Shading model. In the context of the present invention the term shading refers to how the colour and light intensity at a point in a scene is determined, which may be influenced by such factors as light source intensity and colour, surface colour, transparency and reflectivity of the surface. Although the Phong model is used as an example here, other lighting models could be used while preserving the fundamental idea of the invention.

A recursive extension to this lighting model that is suitable for ray tracing and allows reflection and refraction effects to be modelled. The system uses an illumination model can be given by:

$$\mathbf{I} = \mathbf{I_a}\mathbf{k_a}\mathbf{C_d} + \sum_i \mathbf{I_{pi}}[\mathbf{k_d}\mathbf{C_d}(\mathbf{N}.\mathbf{L_i}) + \mathbf{k_s}\mathbf{C_s}(\mathbf{R}.\mathbf{V})^\mathbf{n}] + \mathbf{k_s}\mathbf{S} + \mathbf{k_t}\mathbf{T}$$

where $\mathbf{I_a}$ is the ambient intensity at the point, $k_a$ is the ambient reflectivity, $\mathbf{C_d}$ is the diffuse colour, $\mathbf{k_d}$ is the diffuse reflectivity of the surface, $\mathbf{I_p}$ is the intensity of the light source, $\mathbf{N}$ is the surface normal, $\mathbf{L}$ is the light source vector, $\mathbf{C_s}$ is the specular colour, $\mathbf{R}$ is the reflection vector, $\mathbf{V}$ is the viewing vector and $\mathbf{n}$ is the Phong exponent. $\mathbf{S}$ and T are reflected and transmitted rays respectively. $\mathbf{k_s}\mathbf{S}$ and $\mathbf{k_t}\mathbf{T}$ are calculated by casting reflection and transmission (refraction rays) through the scene and recursively calculating the formula above. It will be appreciated that other formula can be used.

The illumination model is essentially a Phong model with added reflection and refraction. The values are then scaled by $\mathbf{k_s}$ and $\mathbf{k_t}$ and added to the final pixel colour. Of course, this recursion can occur an arbitrary number of times, but is usually capped at a reasonable value (e.g. 3) as the contribution of rays lower down the recursion depth becomes negligible.

It will be appreciated that as this is a recursive function, that a recursion step cannot return until the steps below have returned. To simplify matters, this formula is transformed to an additive calculation. A weight $\omega$ is associated with each ray and these weights are propagated down the tree by successive multiplications of $\mathbf{k_s}$ and $\mathbf{k_t}$. In this way, the order in which the rays contribute to the final pixel colour is not important, unlike in the recursive formulation. This greatly simplifies the design. The contribution of each ray is added successively to a pixel accumulator until all rays have been processed.

As the shading unit is only applicable for the purposes of rendering, it must deal with primary, reflection, refraction and shadow rays. When a primary ray is cast and an intersection is found, only the ambient component is computed and added to the pixel colour. This is given by the formula:

$$I = I_a k_a O_d$$

Reflection and refraction rays are treated in the same way, in that shading an intersection of one of these rays contributes only the ambient illumination to the point. No distinction in fact is made between these rays after ray generation. Shadow rays are responsible for adding the Phong diffuse and specular components to the pixel. One shadow ray corresponds to one light source. Thus for each light source, the contribution is:

$$I = I_p[k_d O_d(N.L_i) + k_s O_s(R.V)^n]$$

To keep track of the many rays which are spawned at each intersection, a ray stack is maintained. The information necessary for the generation of secondary and shadow rays is placed on this stack. This differs for each ray.

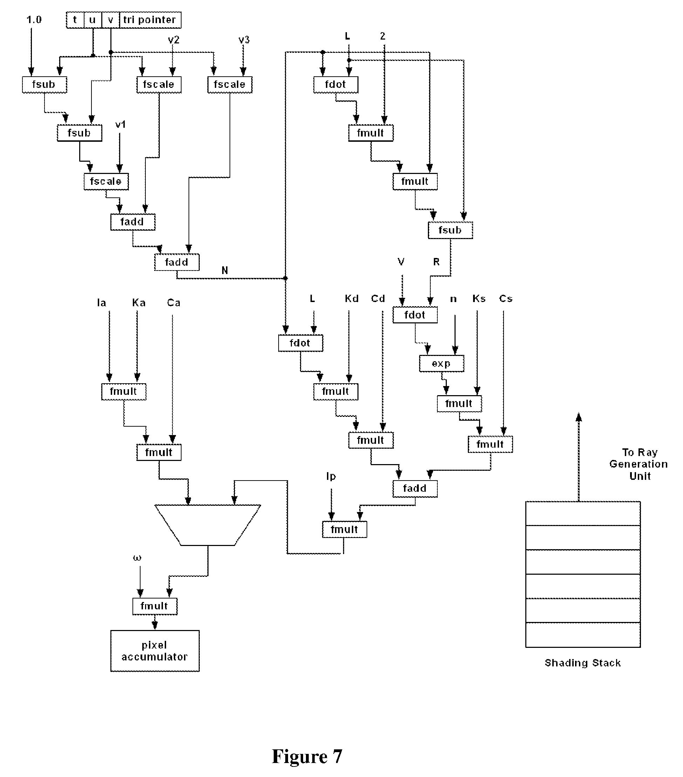

Figure 6 describes the form of a stack entry for a reflection ray. The primary ray for the pixel is initially stored on the ray stack. At the ray generation stage, a new entry is popped off the stack and generated by the ray generation unit. When this ray reaches the shading stage, it may spawn further rays which are placed onto the stack. This cycle continues until no more rays are present on the stack, at which stage the final pixel colour has been determined. A detailed diagram of the shading unit is shown in Figure 7.

The collision detection unit 6 checks for potential collisions between the objects. A suitable algorithm can be employed. The input to the collision detection unit is two intersections, one with each object, and the ray used to intersect them. Based on this information, the angle between the normal vectors and distance along the ray of each intersection is checked. If both of these tests pass, a collision is flagged. To perform the test, two intersections are required with two separate objects. The acceleration data structure for the first object is loaded and an intersection cycle is performed. If an intersection occurs, the acceleration data structure for the second object is loaded and another intersection cycle is performed. As stated, these intersections could alternatively be performed in parallel. These two intersections are then fed to the unit for the collision check.

In order to calculate the exact collision points for one of the objects/bodies, it is necessary to determine the subset of the vertices of this body which are potentially colliding with the other object of the pair. For each of these vertices a ray is cast. The ray is generated by taking the inverse of the vertex normal at this point. The ray is cast through the second body to determine if an intersection occurs. If an intersection occurs, the outward normal on the surface of the second object at this point is determined. The original ray is then also cast through the first object and an intersection determined. Then depending on the angle between the two normal vectors derived for each object, and the distances along the ray of the two intersections, a collision can be determined. As the system is tracing rays through space in much the same way as ray tracing is used for rendering purposes, similar acceleration data structures can be used.

It will be appreciated that the invention provides a hardware micro-architecture that allows ray tracing operations to be performed. It is suitable for, but not limited to, ray tracing for both rendering purposes and physics simulation purposes.

The invention provides for any application which requires both physical simulation, and high quality rendering of such systems. Collision detection is important in such applications as computer aided manufacturing and design, engineering simulations, video games, robotics simulations and virtual reality applications. These applications require high quality rendering to visualize the physical simulations, for which ray tracing would be most suitable.

With respect to computer aided design and manufacturing, the use of collision detection with rendering is widespread. For instance, in manufacturing, the virtual assembly of products in a simulation environment allows designers and engineers to manipulate and test products in a realistic manner without the need for construction of an actual prototype, and at the same time provides all the benefits of such a genuine construction. Such principles have even been extended to the garment industry, where the simulation and visualization of the physical properties of cloth is used during the design process. Additionally, collision detection methods are used in various installations (such as the routing of water, gas and electricity lines in a factory) to insure that no collisions are present in the designs.

Collision detection and rendering is also of great use in mechanical engineering, such as the simulation of manufacturing processes. A typical example would be the simulation of the behaviour of a mechanical assembly lines, which often operate at high speeds and in which "near miss" collision detection is often very important. Additionally, civil engineering tools utilise collision detection in virtual construction. Finally, impact engineering simulations utilise rendering, and particularly collision detection, to a great extent.

Realistic rendering is also the core of the video games industry, and as video games become more and more realistic, collision detection in convincing environments has become of increasingly high importance. Such physics engines include the Havok(TM) physics engine and the open source Bullet physics library. Of course, the movie industry also relies heavily on such high quality rendering, and such physics engines have also been used in many high profile motion pictures Virtual robotics simulations involve determining how of a robot navigates and interacts with an environment. Motivations for such applications include the safety afforded by such virtual simulations as opposed to conducting a genuine physical testing, especially for high power systems. Clearly, collision detection is at the core of such work.

Finally, many virtual reality applications could not be realised without the use of high quality rendering and collision detection together. Virtual reality training environments, such as those employed in the machine tools industry, allow operators to train in a safe environment before actually working with often very dangerous machinery. Vehicle simulators, such as driving simulators, are employed for similar reasons. Haptic simulations, such as dental work and surgical simulations allow students to learn various procedures with no risk to the "patient", and allow a procedure to be practiced any number of times.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A hardware system for performing a plurality of calculations on at least one object in an area, said system comprising:

    means for performing ray tracing to determine rays of light that intersect with at least one object to calculate one or more intersections; and
    means for performing collision detection comprising a collision detection unit adapted to receive inputs from at least two intersections and the determined rays used to intersect to check for potential collisions between different objects.

2. The hardware system as claimed in claim 1 wherein inputs to the collision detection unit comprises two intersections, one intersection for each object, such that the angle between the normal vectors and distance along the ray of each intersection is calculated and a decision is made to determine whether a collision has occurred.

3. The hardware system as claimed in claim 1 or 2 comprising two intersection units wherein the two units perform both intersection calculations in parallel, and inputs the intersections to the single collision detection unit.

4. The hardware system as claimed in any preceding claim comprising a traversal unit coupled with a cache memory, said cache memory allows frequently visited nodes to be stored locally to provide faster memory access times.

5. The hardware system as claimed in any preceding claim wherein the intersection unit comprises means for determining any intersections between a tree leaf node's triangles and a particular ray.

6. The hardware system as claimed in claim 5 wherein a weight $\omega$ is associated with each ray, said weights are propagated down the tree by successive multiplications such that each ray is added successively to a pixel accumulator until all rays have been processed.

7. The hardware system as claimed in any preceding claim further comprising a rendering means adapted to receive intersection information.

8. The hardware system as claimed in claim 7 wherein the rendering means comprises a shading unit.

9. The hardware system as claimed in any preceding claim comprising means to keep track of a plurality of rays at each intersection by generating a ray stack.

10. The hardware system as claimed in claim 9 comprising means for generating secondary and shadow rays and storing in said ray stack.

11. The hardware system as claimed in claims 10 wherein said means comprises detecting a ray at a shading stage, such that further rays are placed onto the stack, until no more rays are present on the stack, so that the final pixel colour can be determined.

12. A method for performing a plurality of calculations on at least one object in an area in a system, said method comprising the steps of:

performing ray tracing to determine rays of light that intersect with at least one object to calculate one or more intersections; and
performing collision detection comprising a collision detection unit adapted to receive inputs from at least two intersections and the determined rays used to intersect to check for potential collisions between different objects.

13. The method as claimed in claim 12 wherein inputs to the collision detection unit comprises two intersections, one intersection for each object, such that the angle between the normal vectors and distance along the ray of each intersection is calculated and a decision is made to determine whether a collision has occurred.

14. The method as claimed in claim 12 or 13 comprising two intersection units wherein the two units, comprising the steps of performing both intersection calculations in parallel, and inputting the intersections to the single collision detection unit.

15. The method as claimed in any of claims 12 to 14 comprising the step of coupling a traversal unit with a cache memory, said cache memory allows frequently visited nodes to be stored locally to provide faster memory access times.

**Figure 1**

**Figure 2**

Figure 3

Figure 4

Figure 5

| Ray Type | Incident Ray | Surface Norm | Origin | Weight | Depth |
|----------|--------------|--------------|--------|--------|-------|

Figure 6

**Figure 7**

**Figure 8**

Europäisches
Patentamt

European
Patent Office

Office européen
des brevets

# EUROPEAN SEARCH REPORT

Application Number

EP 09 17 9394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HERMANN E ET AL: "Ray-traced collision detection for deformable bodies" GRAPP 2008. PROCEEDINGS OF THE THIRD INTERNATIONAL CONFERENCE ON COMPUTER GRAPHICS THEORY AND APPLICATIONS INSTICC - INSTITUTE FOR SYSTEMS AND TECHNOLOGIES OF INFORMATION, CONTROL AND COMMUNICATION MADEIRA, PORTUGAL, 25 January 2008 (2008-01-25), - 25 January 2008 (2008-01-25) pages 293-299, XP002579215 ISBN: 978-989-8111-20-3 * page 295 - page 296 * | 1-15 | INV. G06T15/00 |
| A | ----- ILUSHIN O ET AL: "Precise global collision detection in multi-axis NC-machining" COMPUTER-AIDED DESIGN AND APPLICATIONS CAD SOLUTIONS COMPANY LIMITED THAILAND, vol. 1, no. 1-4, 2004, pages 233-242, XP002579216 ISSN: 1686-4360 * page 5 * ----- -/-- | 1-15 | TECHNICAL FIELDS SEARCHED (IPC) G06T |

The present search report has been drawn up for all claims

| Place of search | Date of completion of the search | Examiner |
|---|---|---|
| Berlin | 26 April 2010 | Ellerbrock, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 09 17 9394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Christian Weizel: "Kollisionserkennungmit Raytracing - Diplomarbeit"<br>Universität Koblenz-Lindau, Institut für Computervisualistik Arbeitsgruppe Computergrafik<br><br>28 October 2005 (2005-10-28), pages 1-39, XP002579217<br>Koblenz, Germany,<br>http://www.uni-koblenz.de/~cg/Diplomarbeiten<br>Retrieved from the Internet:<br>URL:http://www.uni-koblenz.de/~cg/Diplomarbeiten/DA_Weizel.pdf><br>[retrieved on 2010-04-20]<br>* page 3 *<br>----- | 1-15 | |
| A | Alan Watt: "3D Computer Graphics, 3rd Edition"<br>31 December 2000 (2000-12-31),<br>Addison-Wesley , London, England ,<br>XP002579218 , pages 171-350<br>* page 171 - page 179 *<br>* page 277 - page 286 *<br>* page 347 - page 350 *<br>----- | 1-15 | **TECHNICAL FIELDS SEARCHED (IPC)** |

The present search report has been drawn up for all claims

| Place of search | Date of completion of the search | Examiner |
|---|---|---|
| Berlin | 26 April 2010 | Ellerbrock, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080129734 A1

**Non-patent literature cited in the description**

- **TURNER WHITTED.** An improved illumination model for shaded display. *Communications of the ACM,* June 1980, vol. 23 (6), 343-349
- **EVERTON HERMANN ; FRANÇOIS FAURE ; BRUNO RAFFIN.** Ray-Traced Collision Detection for Deformable Bodies. *3rd International Conference on Computer Graphics Theory and Applications,* January 2008
- **SUNG-SOO KIM ; SEUNG-WOO NAM ; DO-HYUNG KIM ; IN-HO LEE.** Hardware-Accelerated Ray-Triangle Intersection Testing for High-Performance Collision Detection. *The 15th International Conference in Central Europe on Computer Graphics, Visualization and Computer Vision,* 2007